# EUROPÄISCHE PATENTSCHRIFT

(11) **EP 0 266 704 B1**
(45) Veröffentlichungstag und Bekanntmachung des Hinweises auf die Patenterteilung: **02.06.1993**
(21) Anmeldenummer: 87116018.0
(22) Anmeldetag: 31.10.1987
(51) Int. Cl.: B60R 16/02, B60S 5/00, G07C 5/08

(54) **Elektronisches System für Kraftfahrzeuge**
Electronic system for motor vehicles
Système électronique pour véhicules à moteur

(30) Priorität: 03.11.1986 DE 3637261
(43) Veröffentlichungstag der Anmeldung: 11.05.1988
(73) Patentinhaber: Bayerische Motoren Werke Aktiengesellschaft, 80788 München (DE)
(72) Erfinder: Negele, Anton, D-8000 München (DE)
(74) Vertreter: Bullwein, Fritz

(56) Entgegenhaltungen:
- EP-A- 0 057 821
- EP-A- 0 178 439

## Beschreibung

Die Erfindung bezieht sich auf ein elektronisches System für Kraftfahrzeuge mit mehreren elektronischen Steuergeräten für verschiedene Aggregate.

Bei Kraftfahrzeugen ist es bekannt, die bei phänotypisch gleichen Kraftfahrzeugen unterschiedlichen Steuergeräte für in der Regel hinsichtlich ihrer Kenn- und Leistungsdaten unterschiedliche Aggregate entweder mit Hilfe von individuellen, zu dem spezifischen Aggregat gehörenden Steuergeräten oder mit einem aggregatspezifisch codierten, im übrigen aber universellen Steuergerät auszuführen. Daneben ist es bekannt (DE-OS 33 09 802) den Bezug zwischen mehreren Sensoren und diesen nachgeschalteten Umsetzeinrichtungen mit Hilfe einer zentralen Steuereinheit herzustellen, die die fahrzeugspezifischen Kennlinien bzw. Kennwerte für die Sensor-Ausgangssignale enthält. Dabei ist jedoch für jeden Umsetzvorgang ein Rückgriff auf die Steuereinheit erforderlich, was insbesondere bei hochfrequenten Umsetzvorgängen zu erheblichen Problemen des Daten-Managements führt.

Der Erfindung liegt die Aufgabe zugrunde, ein elektronisches System der eingangs genannten Art zu schaffen, das auf fertigungstechnisch einfache und kostengünstige Weise eine fahrzeugspezifische, exakt angepaßte Zuordnung zwischen Steuergeräten und mehreren Aggregaten ergibt.

Die Erfindung löst diese Aufgabe durch die kennzeichnenden Merkmale des Patentanspruchs 1.

Wesentlich für die Erfindung ist, daß die eingangs genannten Kraftfahrzeuge zu gleichartigen Aggregaten Steuergeräte besitzen, die phänotypisch und hinsichtlich ihrer elektronischen Komponenten gleich sind. Die Steuergeräte unterscheiden sich lediglich hinsichtlich der fahrzeugspezifisch-variablen Daten. Diese Daten werden einmalig vor der ersten Inbetriebnahme des Kraftfahrzeugs eingegeben. Dies kann zweckmäßigerweise während des Herstellungsverfahrens des Kraftfahrzeugs "am Band" vorgenommen werden. Die Steuergeräte werden somit einmalig individuell mit den für sie relevanten variablen Daten "geimpft". Durch das serielle bzw. parallele Einschreiben der Daten in die verschiedenen Steuergeräte wird zudem eine erhebliche Vereinfachung des Herstellungsvorgangs bei in der Regel sicherer Kontrolle erreicht. Ein weiterer Vorteil ergibt sich aus dem Umstand, daß die Steuergeräte zu den sich hinsichtlich ihrer Leistungsdaten unterscheidenden Aggregaten untereinander gleich sind. Damit ist es erstmals möglich, den Fertigungsprozeß weiter zu vereinfachen. Die Steuergeräte können dabei "blind" dem jeweiligen Aggregat zugefügt werden. Auf eine besondere elektrische bzw. elektronische Ausgestaltung der Steuergeräte ist dabei keine Rücksicht zu nehmen.

Eine vorteilhafte Ausgestaltung der Erfindung besteht darin, die Eingaben der Daten über eine Diagnoseleitung vorzunehmen. Zusätzlich zu der Verringerung des Verkabelungsaufwands ergibt sich damit die Möglichkeit, die eingegebenen Daten bereits unmittelbar im Anschluß an die Eingabe zu überprüfen und dabei evtl. Fehler bei der Datenübertragung sofort festzustellen.

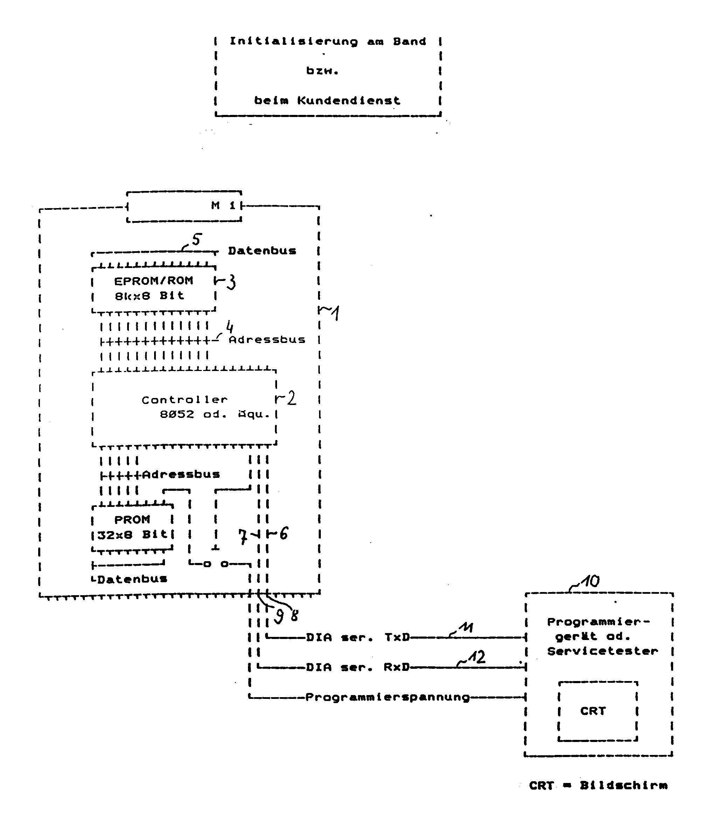

In der Zeichnung ist ein Ausführungsbeispiel der Erfindung dargestellt.

Diese zeigt schematisch den Aufbau eines Steuergeräts, das gem. der Erfindung zusammen mit anderen Steuergeräten bevorzugt während der Herstellung des Kraftfahrzeugs fahrzeugspezifisch individualisiert wird.

Das Steuergerät 1 dient beispielsweise zur Einstellung von Zündung und Einspritzung einer nicht gezeigten Brennkraftmaschine. Es enthält eine CPU 2 sowie einen beschreibbaren Festwertspeicher (EPROM) 3. Die Teile 2 und 3 sind über einen Adressbus 4 sowie einen Datenbus 5 miteinander verbunden. Zwei Diagnoseleitungen 6 und 7 führen von der CPU zu zwei Anschlußsteckern 8 und 9.

Vor der ersten Inbetriebnahme des Kraftfahrzeugs werden den Steuergeräten, die alle ähnlich wie das dargestellte Steuergerät 1 aufgebaut sind, von einem externen Programmiergerät 10 über Leitungen 11 und 12, die an den Anschlußkontakten 8 und 9 angeschlossen sind, die fahrzeugspezifische Daten übertragen. Diese gelangen über die Zuleitungen 6 und 7 und die CPU 2 sowie den Datenbus 5 in den Speicher 3. Dieses Eingeben der Daten kann beispielsweise während der Fertigung des Kraftfahrzeugs oder zwischen dieser Fertigung und der Auslieferung des Fahrzeugs an den Kunden vorgenommen werden.

Bei den Leitungen 6 und 7 handelt es sich zusätzlich um Diagnoseleitungen, über die der Inhalt der Speichereinheit 3 bzw. darin festgehaltene Fehler abfragbar sind. Diese Abfrage kann unmittelbar im Anschluß an die Eingabe der Daten oder zu einem späteren Zeitpunkt nach Inbetriebnahme des Kraftfahrzeugs vorgenommen werden.

Anstelle der Eingabe kompletter Datensätze kann der Aufbau der Speichereinheit 3 auch derart sein, daß darin sämtliche Daten für sämtliche Varianten des Steuergeräts 1 enthalten sind und über die Leitungen 11 und 12 lediglich eine fahrzeugspezifische Codierung eingegeben wird. Damit werden von diesen vollständigen Daten die für das jeweilige Fahrzeug relevanten Daten ausgewählt.

## Patentansprüche

1. Elektronisches System für Kraftfahrzeuge mit mehreren elektronischen Steuergeräten für verschiedene Aggregate, dadurch gekennzeichnet, daß die Steuergeräte (1) miteinander über eine serielle Schnittstelle verbunden sind, daß die Steuergeräte (1) individuelle Speicher (3) für fahrzeugspezifisch-variable Daten (Parameter, Kennlinien, Kennfelder und/oder Programmschritte) zur Sicherstellung der bestimmungsgemäßen Arbeitsweise der Steuergeräte aufweisen und daß die Speicher vor der ersten Inbetriebnahme des Kraftfahrzeugs während eines gemeinsamen Behandlungsvorgangs mit den individuellen fahrzeugspezifischen Daten beschrieben werden.

2. Elektronisches System nach Anspruch 1, dadurch gekennzeichnet, daß die Eingabe der Daten über Diagnoseleitungen (6,7) der Steuergeräte erfolgt.

## Claims

1. An electronic system for motor vehicles comprising a number of electronic control devices for different units, characterised in that the control devices (1) are interconnected via a serial interface, the control units (1) have individual stores (3) for variable data (parameters, characteristic curves, performance graphs and/or program steps) specific to the vehicle in order to ensure that the control devices operate to specification, and the stores are programmed with the individual data specific to the vehicle during a common treatment process before the vehicle is first put into operation.

2. An electronic system according to claim 1, characterised in that the data is fed into the control devices via diagnosis lines (6, 7).

## Revendications

1. Système électronique pour véhicules automobiles équipés de plusieurs ensembles de commande de divers appareils, caractérisé en ce que les ensembles de commande (1) sont reliés en série, ils comprennent des mémoires individuelles (3) d'enregistrement des données spécifiques au véhicule (paramètres, courbes, caractéristiques, champs de valeurs et/ou unités de traitement) permettant d'assurer le fonctionnement conforme des ensembles de commande, les mémoires étant, avant la première mise en service du véhicule, chargées des données individuelles spécifiques au véhicule, au cours d'une opération commune de traitement.

2. Système électronique selon la revendication 1, caractérisé en ce que l'introduction des données s'effectue par l'intermédiaire des lignes de diagnostic (6, 7) des ensembles de pilotage.
